(19) Europäisches Patentamt
European Patent Office
Office européen des brevets

(11) EP 2 270 969 B1

(12) **EUROPEAN PATENT SPECIFICATION**

(45) Date of publication and mention
of the grant of the patent:
**08.02.2012 Bulletin 2012/06**

(21) Application number: **09251710.1**

(22) Date of filing: **02.07.2009**

(51) Int Cl.:
***H02M 7/23*** *(2006.01)*

(54) **Control methods for parallel-connected power converters**

Steuerungsverfahren für parallel geschaltete Stromwandler

Procédés de commande de convertisseurs d'alimentation reliés en parallèle

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**05.01.2011 Bulletin 2011/01**

(73) Proprietor: **Converteam Technology Ltd**
**Rugby**
**Warwickshire CV21 1BU (GB)**

(72) Inventors:
• **Feng, Chunmei**
**Stoke-on-Trent**
**Staffordshire ST7 1JX (GB)**
• **Moreno Casteñeda, Veimar Yobany**
**Congleton**
**Cheshire CW12 4WL (GB)**
• **Webb, Richard Stuart**
**Newcastle-Under-Lyme**
**Staffordshire ST5 0HY (GB)**
• **Knight, Jeremy Stephen Prevost**
**Haverfordwest**
**Pembrokeshire SA62 4NG (GB)**

(74) Representative: **Lacey, Dean Andrew**
**Serjeants**
**25 The Crescent, King Street**
**Leicester**
**LE1 6RX (GB)**

(56) References cited:
**EP-A1- 2 020 740        JP-A- 5 308 777**
**US-A1- 2004 032 755**

• **ZHIHONG YE ET AL: "Control of circulating current in parallel three-phase boost rectifiers" APEC 2000. FIFTEENTH ANNUAL IEEE APPLIED POWER ELECTRONICS CONFERENCE AND EXPOSITION, vol. 1, 2000, pages 506-512, XP002561009 IEEE PISCATAWAY, NJ, USA ISBN: 0-7803-5864-3**

**Description**

FIELD OF THE INVENTION

The present invention relates generally to methods for controlling a plurality of parallel-connected power converters. More particularly, the present invention relates to methods for controlling a plurality of power converters connected in parallel between an ac arrangement and a common dc link. Embodiments of the present invention relate to methods for controlling a plurality of parallel-connected power converters operating with a pulse width modulation (PWM) strategy and which can be used to interface a motor requiring variable voltage at variable frequency to a three-phase supply network (ac busbar) at nominally fixed voltage and frequency. The methods can also be used for controlling a plurality of parallel-connected power converters operating with a PWM strategy that are used to interface generators providing variable voltage at variable frequency to a power grid or to a supply network at nominally fixed voltage and frequency.

BACKGROUND ART

As mentioned above, power converters can be used in motoring applications to convert the nominally fixed voltage and frequency supplied by a three-phase supply network into variable voltage and frequency to provide suitable control for a variable speed ac motor.

Typically, a power converter in the form of a network bridge and operating as an active rectifier supplies power to a dc link. The dc output voltage of the network bridge is fed to the dc terminals of a power converter in the form of a machine bridge and operating as an active inverter. The ac output voltage of the machine bridge is finally supplied to a variable speed ac motor.

Power converters can also be used in electricity generation applications in which wind energy is converted into electrical energy by using a wind turbine to drive the rotor of a generator, either directly or indirectly by means of a gearbox. The ac frequency that is developed at the stator terminals of the generator (the stator voltage) is directly proportional to the speed of rotation of the rotor. The voltage at the generator terminals also varies as a function of speed and, depending on the particular type of generator, on the flux level.

For optimum energy capture, the speed of rotation of the output shaft of the wind turbine will vary according to the speed of the wind driving the turbine blades. To limit the energy capture at high wind speeds, the speed of rotation of the output shaft is controlled by altering the pitch of the turbine blades. Suitably configured power converters can be used to connect the variable voltage and frequency of the generator to the nominally fixed voltage and frequency of the supply network.

Typically, a power converter in the form of a generator bridge and operating as an active rectifier is used to supply power from the generator to a dc link. The dc output voltage of the generator bridge is fed to the dc terminals of a power converter in the form of a network bridge and operating as an active inverter. The ac output voltage of the network bridge is filtered and supplied to the nominally fixed frequency supply network via a step-up transformer.

In some applications employing three-phase power supplies, such as those outlined above, it can be desirable to connect several power converters in parallel. For example, where an element of redundancy is required to ensure that a reliable source of power can be provided in the event of failure of a power converter, the required redundancy can be achieved by connecting several power converters in parallel. It can also be desirable to connect several power converters in parallel in applications where high performance/efficiency and/or high power output is/are required.

A number of potential difficulties can, however, arise when power converters are connected in parallel and although strategies for mitigating the effects of those difficulties are known, the existing strategies are not ideal.

When power converters are connected in parallel, it is necessary to provide for suitable current sharing between individual power converters to optimise the power distribution amongst the power converters. This can be achieved by controlling the output voltage droop characteristics of the power converters, and various voltage droop control methods are known. Whilst known voltage droop control methods may be able to provide for suitable current sharing between parallel-connected power converters, this is typically at the expense of voltage regulation, with the range in output voltage variation between the power converters being substantially increased.

In the event that there is any desynchronisation between the PWM strategies of the power converters, and in particular the PWM command signals, it is possible for a circulating current to flow around the loop formed by the power converters. The presence of a circulating current is undesirable because it does not process useful power and places extra stress on the power converters. The circulating current can, in fact, be destructive if it is allowed to become excessively large.

One known solution for eliminating circulating current amongst parallel-connected power converters is to install an isolation transformer in the three-phase supply path of all but one of the power converters. The isolation transformer electrically separates the input circuits, whilst allowing the transmission of ac signal/power. Isolation transformers are, however, bulky and very expensive and it would be preferable not to have to use them. Another solution for minimising circulating current in parallel-connected power converters is described in US 2004/0032755 A1.

There is, therefore, a need for improved methods for controlling a plurality of parallel-connected power converters which may address some or all of the difficulties associated with known parallel-connected power converters, such as the difficulties outlined above.

SUMMARY OF THE INVENTION

According to one aspect of the present invention, there is provided a method for controlling a plurality of power converters connected in parallel between an ac arrangement and a common dc link, each of the power converters operating in accordance with a pulse width modulation (PWM) strategy and having an independently variable dc link reference voltage, the method comprising modifying an output voltage droop characteristic of at least one of the plurality of parallel-connected power converters by varying the dc link reference voltage of the at least one power converter based on the output current of the at least one power converter and the average of the output currents of the plurality of power converters.

The method enables the current sharing performance of the power converters to be improved and at the same time enables the voltage regulation performance to be improved. This is in contrast to some known voltage droop control methods in which the voltage regulation performance is adversely affected as current sharing performance is improved.

The method may comprise modifying the output voltage droop characteristic of each of the plurality of parallel-connected power converters by varying the dc link reference voltage of each power converter based on the output current of each respective power converter and the average of the output currents of the plurality of power converters. Such an implementation provides for even greater control over the current sharing and voltage regulation performance of the power converters.

For example, where at least first and second power converters are connected in parallel, the method may comprise modifying the output voltage droop characteristic of the first power converter by decreasing the dc link reference voltage of the first power converter based on the output current of the first power converter and the average of the output currents of the plurality of power converters and may comprise modifying the output voltage droop characteristic of the second power converter by increasing the dc link reference voltage of the second power converter based on the output current of the second power converter and the average of the output currents of the plurality of power converters.

The method may comprise continuously determining the output currents of the plurality of power converters, thus permitting the average of the output currents of the plurality of parallel-connected power converters to be determined continuously, in real-time. This may permit the dc link reference voltage of the or each power converter to be actively varied based on the continuous determinations of the output currents and the average of the output currents. The output voltage droop characteristic of the or each power converter can thus advantageously be actively modified.

The method may comprise varying the dc link reference voltage of the or each power converter based on the error between the average of the output currents of the plurality of power converters and the rms output current of the or each respective power converter.

The error between the average of the output currents of the plurality of power converters and the rms output current of the or each respective power converter may be determined by subtracting the rms output current of the or each respective power converter from the average of the output currents of the plurality of power converters.

In some embodiments, the method may comprise transforming the rms output current of the or each power converter and the average of the output currents of the plurality of power converters from the stationary reference frame into the rotating reference frame prior to performing said subtraction step to determine the error between the currents. In this case, the dc link reference voltage of the or each power converter may be varied based on the error between the transformed value of the rms output current of the or each respective power converter and the transformed value of the average of the output currents of the plurality of power converters.

The output voltage droop characteristic of the or each power converter may be defined by a droop rate and a droop sign applied to the droop rate. The droop sign may be either positive or negative. The step of controlling the output voltage droop characteristic of at least one of the plurality of power converters may further comprise determining the droop sign applied to the droop rate and more particularly may comprise determining whether the droop sign, and hence the droop rate, is positive or negative. The parallel-connected power converters can thus be used when power is either supplied from the ac arrangement to the common dc link (for example in motoring applications) or from the common dc link to the ac arrangement (for example in power generation applications).

The step of determining the droop sign may comprise determining the direction of current flow through the common dc link. The direction of current flow through the common dc link is indicative of the power flow direction and thus enables the correct droop sign, positive or negative, to be correctly determined.

As indicated above, desynchronisation between parallel-connected power converters can cause a circulating current to flow between the power converters. The method for controlling the plurality of parallel-connected power converters may thus additionally comprise synchronising the power converters by providing each of the parallel-connected power converters with a synchronisation signal. The synchronisation signal enables the PWM switching strategies of the power converters to be synchronised.

The power converters may be connected together to define a cascaded array comprising a master power converter and one or more slave power converters. In such a cascaded array, the synchronisation signals may be passed between the power converters in the array whilst each of the power converters in the array is still connected in parallel between the ac arrangement and the common dc link. The period of the synchronisation signal received by each power converter in the array may be different and may be indicative of the position of that power converter in the array.

The power converter in the array that is the first to come on-line may assume a role as a "master" power converter and may take a position as the first power converter in the array. In the first instance, the decision to assume the role as the "master" power converter may be made because of the absence or lack of any synchronisation signal being received by that power converter. Any power converter that receives a synchronisation signal when it comes on-line will preferably assume a role as a "slave" power converter. Any "slave" power converter that fails to receive a synchronisation signal for any reason (e.g. the immediately preceding power converter in the array goes off-line or the synchronisation signal is disrupted) may assume a role as a "master" power converter.

The synchronisation signals may be transmitted from one power converter to another power converter by any suitable means. For example, the synchronisation signals may be a wireless signal such as a radio frequency (RF) signal, for example, or an electrical or optical signal transmitted through an electrical cable or an optical fibre.

The synchronisation of the parallel-connected power converters using synchronisation signals minimises any desynchronisation (i.e. phase shift) between the PWM switching strategies of the parallel-connected power converters and thereby minimises or eliminates any unwanted circulating currents flowing between the power converters.

The PWM strategy of each power converter may be defined by an independent voltage carrier signal and an independently controllable modulating sinusoidal voltage signal which are used to generate a PWM command signal for each PWM strategy. The voltage carrier signals of the PWM strategies may have the same switching period and any desynchronisation of the PWM command signals may cause an unwanted circulating current to flow between the power converters. Despite the use of the synchronisation signals mentioned above to synchronise the power converters, a circulating current may still be present when certain faults, such as an earth fault, occur.

Accordingly, the method for controlling the plurality of parallel-connected power converters may additionally comprise providing the independently controllable modulating sinusoidal voltage signal of the PWM strategy of at least one of the power converters with a dc voltage offset to modify the PWM command signal of the at least one power converter and thereby increase the synchronisation of the PWM command signals so that the magnitude of any unwanted circulating current is reduced. The method may possibly comprise providing the independently controllable modulating sinusoidal voltage signal of all but one of the power converters with a dc voltage offset to modify the PWM command signals of all but one of those power converters and thereby increase the synchronisation of the PWM command signals of all of the power converters so that the magnitude of any unwanted circulating current is reduced.

This dc voltage offset methodology, which is particularly intended to reduce or eliminate unwanted zero sequence circulating current, is typically implemented using a proportional-integral-derivative (PID) controller and is fully described in the Applicant's European patent application having the same filing date as the present application and entitled 'Control methods for the synchronisation of parallel-connected power converters operating in accordance with a pulse width modulation (PWM) strategy'.

According to an embodiment of the present invention, there is provided a method for controlling a plurality of power converters connected in parallel between an ac arrangement and a common dc link, each of the power converters operating in accordance with a pulse width modulation (PWM) strategy and having an independently variable dc link reference voltage, the PWM strategy of each power converter being defined by an independent voltage carrier signal and an independently controllable modulating sinusoidal voltage signal which are used to generate a PWM command signal for each PWM strategy, wherein the voltage carrier signals of the PWM strategies have the same switching period and wherein any desynchronisation of the PWM command signals causes an unwanted circulating current to flow between the power converters, the method comprising:-

(i) modifying an output voltage droop characteristic of at least one of the plurality of parallel-connected power converters by varying the dc link reference voltage of the at least one power converter based on the output current of the at least one power converter and the average of the output currents of the plurality of power converters;
(ii) synchronising the power converters by providing each of the parallel-connected power converters with a synchronisation signal;
(iii) providing the independently controllable modulating sinusoidal voltage signal of the PWM strategy of at least one of the power converters with a dc voltage offset to modify the PWM command signal of the at least one power converter and thereby increase the synchronisation of the PWM command signals so that the magnitude of any unwanted circulating current is reduced.

The method for controlling the plurality of power converters according to this embodiment may include one or more of the features or method steps defined above.

The method according to this embodiment may be particularly advantageous since it (i) provides for current sharing between the parallel-connected power converters; (ii) reduces or eliminates desynchronisation (i.e. phase shift) of the PWM command signals of the PWM strategies of the power converters; and (iii) reduces or eliminates zero sequence circulating current which may arise due to unbalanced loads and/or some faults.

According to another aspect of the present invention, there is provided a plurality of power converters connected in parallel between an ac arrangement and a common dc link, each of the power converters operating in accordance with a pulse width modulation (PWM) strategy and having an independently variable dc link reference voltage, at least one of the power converters including a droop controller for modifying an output voltage droop characteristic of the power converter, wherein the droop controller is operable to modify the output voltage droop characteristic by varying the dc link reference voltage of the at least one power converter based on the output current of the at least one power converter and the average of the output currents of the plurality of power converters.

Each of the plurality of parallel-connected power converters may include a droop controller. Each droop controller may be operable to modify the output voltage droop characteristic of its respective power converter by varying the dc link reference voltage of its respective power converter based on the output current of its respective power converter and the average of the output currents of the plurality of power converters.

The or each droop controller may be operable to actively vary the dc link reference voltage of its respective power converter based on continuous determinations of both the output current of its respective power converter and the average of the output currents of the plurality of power converters.

The or each droop controller may be operable to vary the dc link reference voltage of its respective power converter by determining the error between the average of the output currents of the plurality of power converters and the rms output current of its respective power converter.

The or each droop controller may be operable to determine the error between the average of the output currents of the plurality of power converters and the rms output current of its respective power converter by subtracting the rms output current of its respective power converter from the average of the output currents.

The or each droop controller may be operable to control the output voltage droop characteristic of its respective power converter by determining the droop sign applied to the droop rate, and more particularly by determining whether the droop sign, and hence the droop rate, is positive or negative. As indicated above, such an implementation enables the power converters to be used when power is either supplied from the ac arrangement to the common dc link or from the common dc link to the ac arrangement (i.e. in motoring or power generation applications).

The or each droop controller may be operable to determine the droop sign applied to the droop rate of its respective power converter by determining the direction of current flow through the common dc link.

The power converters may be operable as active rectifiers or may be operable as active inverters.

When the plurality of parallel-connected power converters operate as active rectifiers, the ac arrangement may comprise a common ac source which supplies power via the plurality of parallel-connected power converters to the common dc link. The plurality of active rectifiers may thus be used to interface a motor to a supply network or busbar. The ac arrangement may alternatively comprise a plurality of individual ac sources, each of which is associated with one of the parallel-connected power converters and which together supply power via the plurality of parallel-connected power converters to the common dc link.

When the plurality of parallel-connected power converters operate as active inverters, the common dc link may supply power via the plurality of parallel-connected power converters to the ac arrangement, which may be a common ac load or a plurality of individual ac loads. The plurality of active inverters may thus be used to interface a generator to a supply network.

In some embodiments, the ac arrangement may comprise a plurality of individual ac sources and ac loads and the common dc link may comprise a common dc ring bus. Each of the plurality of power converters may be connected to an ac source or an ac load and in parallel to the common dc ring bus. Each power converter that is connected to an ac source may operate as an active rectifier to supply power from the respective ac source to the common dc ring bus. Each power converter that is connected to an ac load may operate as an active inverter to supply power from the common dc ring bus to the respective ac load. It will, thus, be clear that some of the plurality of parallel-connected power converters may operate as active rectifiers whilst the remainder of the plurality of parallel-connected power converters may operate as active inverters.

Each of the plurality of parallel-connected power converters may include a controller for receiving and transmitting a synchronisation signal. The synchronisation signal permits the PWM switching strategies of the power converters to be synchronised, thereby avoiding phase shift between the PWM switching strategies and resultant circulating currents.

As indicated above, the power converters may be connected together to define a cascaded array comprising a master power converter and one or more slave power converters. Each controller may be operable to determine the position of its associated power converter in the array based on the period of the received synchronisation signal.

The PWM strategy of each power converter may be defined by an independent voltage carrier signal and an independently controllable modulating sinusoidal voltage signal which are used to generate a PWM command signal for each PWM strategy. The voltage carrier signals of the PWM strategies may have the same switching period and desynchronisation of the PWM command signals may cause an unwanted circulating current to flow between the power converters. Accordingly, at least one of the plurality of parallel-connected power converters may include a controller which is selectively operable to provide the independently controllable modulating sinusoidal voltage signal of the PWM strategy of the at least one power converter with a dc voltage offset to modify the PWM command signal of the at least one power converter. This may increase the synchronisation of the PWM command signals so that the magnitude of any unwanted circulating current is reduced.

According to a further aspect of the present invention, there is provided a method for controlling a plurality of power converters connected in parallel between an ac arrangement and a common dc link, each of the power converters operating in accordance with a pulse width modulation (PWM) strategy and having an output voltage droop characteristic defined by a droop rate and a droop sign applied to the droop rate, wherein the method comprises controlling the output voltage droop characteristic of at least one of the plurality of power converters by determining the droop sign applied to the droop rate, the droop sign being determined based on the direction of current flow through the common dc link.

The method for controlling the plurality of power converters according to this further aspect of the present invention may include one or more of the method steps or features defined above.

The droop sign may be positive or negative. The direction of current flow through the common dc link is indicative of the power flow direction and thus enables the correct droop sign, positive or negative, to be correctly determined. The step of controlling the output voltage droop characteristic of at least one of the plurality of power converters may thus comprise determining whether the droop sign is positive or negative based on the direction of current flow through the common dc link.

The parallel-connected power converters can thus be used when power is either supplied from the ac arrangement to the common dc link (for example in motoring applications) or from the common dc link to the ac arrangement (for example in power generation applications).

DRAWINGS

Figure 1 is a schematic illustration of a power conversion system in which several power converters are connected in parallel between a common ac source and a common dc link;

Figure 2 is a schematic illustration of the load regulation characteristics of the parallel-connected power converters of Figure 1;

Figure 3 is a schematic illustration of modified load regulation characteristics of the parallel-connected power converters of Figure 1 in which the output voltage droop characteristics of both power converters have been modified by varying the dc link reference voltages of both power converters;

Figure 4 is a schematic illustration of one embodiment of a control methodology for controlling the operation of at least one of a plurality of parallel-connected power converters; and

Figure 5 is a schematic illustration of one implementation of a cascaded array of controllers which operate to synchronise a cascaded array of parallel-connected power converters.

DETAILED DESCRIPTION OF EMBODIMENTS OF THE INVENTION

Embodiments of the present invention will now be described by way of example only and with reference to the accompanying drawings.

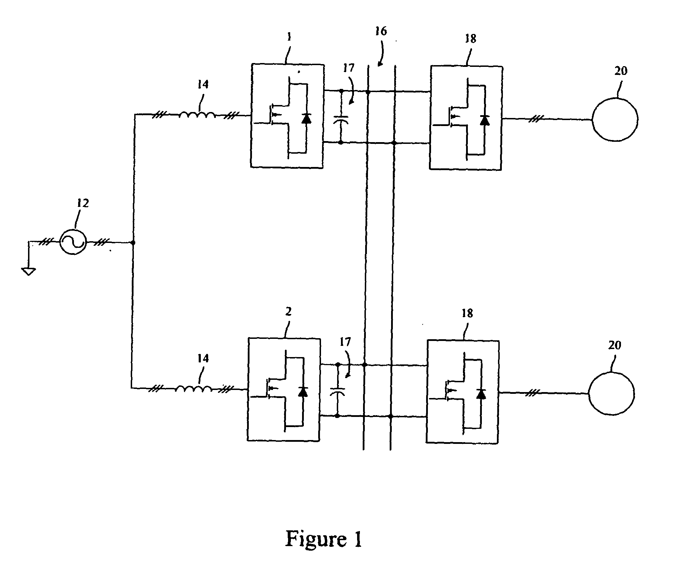

Figure 1 is a schematic illustration showing a plurality of power converters 1, 2 connected in parallel. In the illustrated arrangement, the power converters 1, 2 operate as active rectifiers and have ac terminals connected to a common three phase ac source 12 via line reactors 14 and dc terminals connected to a common dc link 16, via dc link capacitors 17, to which power is supplied. Although two power converters 1, 2 are illustrated in Figure 1, it should be understood that any suitable number of power converters may be provided and that this may depend, amongst other things, on the total power requirement.

Each power converter 1, 2 has a conventional three-phase two-level topology with a series of semiconductor power switching devices fully controlled and regulated using a pulse width modulation (PWM) switching strategy. However, in practice the power converters 1, 2 can have any suitable topology such as a neutral point clamped (NPC) topology or a flying capacitor (FC) multi-level topology.

A plurality of active inverters 18 supply power from the common dc link 16 to ac loads 20 such as ac motors. Each of the active inverters 18 has a similar three-phase two level topology to the power converters 1, 2 with a series of semiconductor switching devices fully controlled and regulated using a PWM switching strategy. However, in practice, the active inverters 18 can have any suitable topology as discussed above for the power converters 1, 2. Although only two active inverters 18 and associated ac loads 20 are illustrated, it should be understood that any suitable number active inverters 18 and ac loads 20 could be provided.

Due to differing component tolerances and other factors, the power converters 1, 2 may not be identical and this can present operational difficulties when they are connected in parallel, in particular with regard to current sharing and voltage regulation. In order to mitigate these difficulties, it is necessary to provide for suitable current sharing between the individual power converters 1, 2 to optimise the power distribution amongst the power converters 1, 2. As indicated above, this can be achieved by modifying the output voltage droop characteristics of the power converters 1, 2 as well as by synchronising the PWM strategies, and in particular the PWM command signals, of the individual power converters 1, 2.

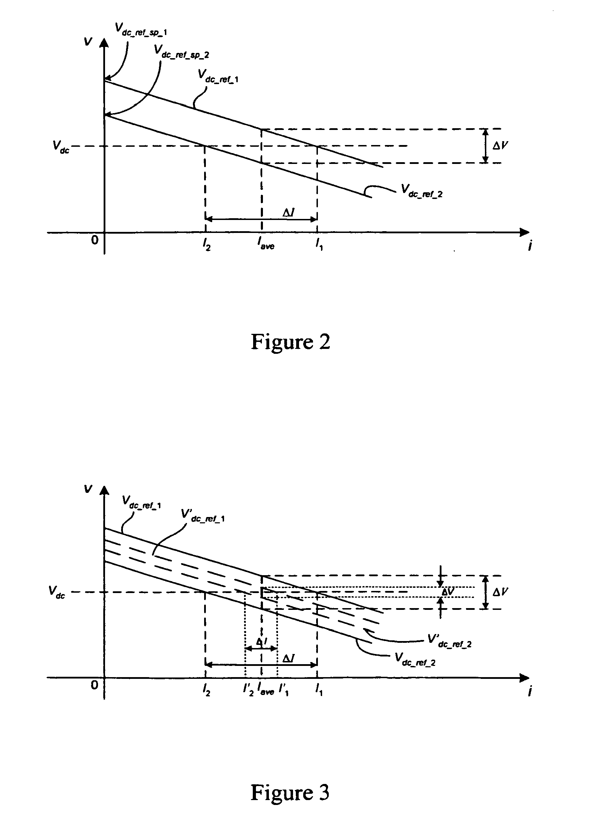

Figure 2 illustrates one example of the load regulation characteristics of the parallel-connected power converters 1, 2 of Figure 1. In this example, the dc link reference voltage set-point values $V_{dc\_ref\_sp-1}$ and $V_{dc\_ref\_sp-2}$ (i.e. the dc link reference voltages $V_{dc\_ref\_1}$ and $V_{dc\_ref\_2}$ at no load) are different and the droop rates of the two power converters 1, 2 are the same. It should, however, be appreciated that the dc link reference voltage set-point values $V_{dc\_ref\_sp\_1}$ and $V_{dc\_ref\_sp\_2}$ and/or the droop rates of the two power converters 1, 2 can be the same or different.

The dc link reference voltage of each power converter is determined in accordance with the following equation:-

$$V_{dc\_ref\_n} = V_{dc\_ref\_sp\_n} - K_n I_n \qquad \text{[Equation 1]}$$

where $V_{dc\_ref\_sp\_n}$ is the dc link reference voltage set-point value for each power converter $n$, $K_n$ is the droop rate of each power converter $n$ and $I_n$ is the output current of each power converter n.

It will be readily appreciated from Figure 2 that there is a difference $\Delta I$ between the output currents $I_1$ and $I_2$ of the two parallel-connected power converters 1, 2 illustrated in Figure 1 for the same dc link voltage (i.e. output voltage) $V_{dc}$ and that there is a difference $\Delta V$ between the dc link voltages of the two power converters 1, 2 for the same output current $I_{ave}$. It will be appreciated from Figure 2 that the output current $I_{ave}$ is the average of the output currents $I_1$ and $I_2$ of the two power converters 1, 2 for the same dc link voltage $V_{dc}$.

Embodiments of the present invention provide a control methodology for modifying the output voltage droop characteristic of each of the power converters 1, 2 to reduce both the difference $\Delta I$ in the output currents $I_1$ and $I_2$ of the two power converters 1, 2 for a given dc link voltage $V_{dc}$ and the difference $\Delta V$ between the dc link voltages of the two power converters 1, 2 for the same output current $I_{ave}$. The methodology thus improves both the current sharing performance and the voltage regulation accuracy of the parallel-connected power converters 1, 2.

In more detail, the dc link reference voltage $V_{dc\_ref\_n}$ of each power converter n is independently variable. A suitable droop controller is provided for this purpose, as will be described later in this specification. Specifically, the dc link reference voltage $V_{dc\_ref\_n}$ of each power converter is varied based on the average of the output currents of the plurality of parallel-connected power converters $I_{ave}$ and the output current $I_n$ of each respective power converter n.

Figure 3 illustrates one example of possible modified load regulation characteristics for the two parallel-connected power converters 1, 2 illustrated in Figure 1. Specifically, the output voltage droop characteristic of each of the parallel-connected power converters 1, 2 is modified by varying the dc link reference voltage $V_{dc\_ref\_1}$ and $V_{dc\_ref\_2}$ of each power converter 1, 2. In accordance with embodiments of the invention, the dc link reference voltage $V_{dc\_ref\_1}$ and $V_{dc\_ref\_2}$ of each power converter is varied based on the average of the output currents of the plurality of parallel-connected power converters $I_{ave}$ and the output current $I_1$ and $I_2$ of each respective power converter 1, 2. In more general terms, the modified dc link reference voltage $V'_{dc\_ref\_n}$ of each power converter n is determined in accordance with the following equation:

$$V'_{dc\_ref\_n} = V_{dc\_ref\_sp\_n} - K_n I_n + k'\left(I_{ave} - I_n\right) \qquad \text{[Equation 2]}$$

where $(I_{ave} - I_n)$ is the error between the average of the output currents of the plurality of parallel-connected power converters and the output current of the power converter n and k' is an offset adjustment value.

As a result of the use of the control methodology defined by equation 2, it will be seen in Figure 3 that the modified dc link reference voltage $V'_{dc\_ref\_1}$ of the first power converter 1 is reduced relative to the original dc link reference voltage $V_{dc\_ref\_1}$ and that the modified dc link reference voltage $V'_{dc\_ref\_2}$ of the second power converter 2 is increased relative to the original dc link reference voltage $V_{dc\_ref\_2}$, thereby modifying the output voltage droop characteristics of both power converters 1, 2. As a result, there is a decrease in the difference $\Delta I$ between the output currents $I_1$ and $I_2$ of both power converters 1, 2 for the same dc link voltage $V_{dc}$ and a decrease in the difference $\Delta V$ between the dc link voltages of the two power converters 1, 2 for the same output current $I_{ave}$. Both the current sharing performance and the voltage regulation performance of the power converters 1, 2 are thus improved by utilising the control methodology according to embodiments of the present invention.

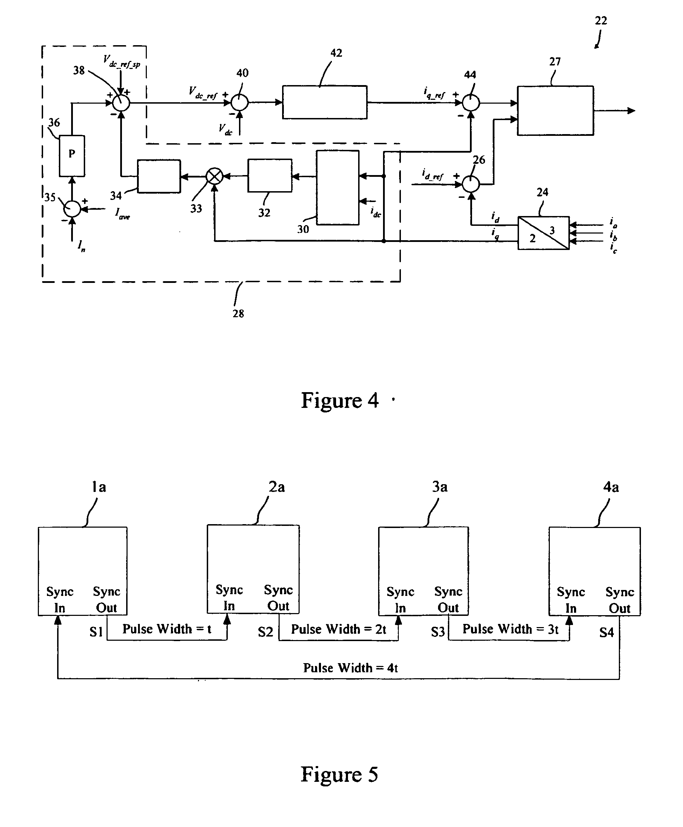

Figure 4 is a schematic illustration of one possible embodiment of a controller 22 for use with at least one, and preferably both, of the power converters 1, 2 illustrated in Figure 1 which implements the control methodology outlined above.

The controller 22 is operable to initially measure the instantaneous three-phase currents $i_a$, $i_b$, and $i_c$ of each power converter 1, 2, for example using suitable current sensors. The controller 22 includes a Forward Park transformation block 24 which transforms the measured three phase currents $i_a$, $i_b$, and $i_c$ from the stationary reference frame into the rotating reference frame to provide amplitude values of the reactive current $i_d$ and active current $i_q$. The transformation equations implemented by the Forward Park transformation block 24 are as follows:

$$i_d = \frac{2}{3} \times (I_a \sin(\omega t) + I_b \sin(\omega t - 120°) + I_c \sin(\omega t + 120°)) \quad \text{[Equation 3]}$$

$$i_q = \frac{2}{3} \times (I_a \cos(\omega t) + I_b \cos(\omega t - 120°) + I_c \cos(\omega t + 120°)) \quad \text{[Equation 4]}$$

where $I_a$, $I_b$ and $I_c$ are rms values of the measured instantaneous three-phase currents $i_a$, $i_b$ and $i_c$ of each power converter and $\omega$ is the rotation speed (rad/s) of the rotating frame.

The controller 22 is operable to compare the reactive current $i_d$ determined by the Forward Park transformation block 24 with the desired reactive current reference value $i_{d\_ref}$ by subtracting the reactive current $i_d$ from the desired reactive current reference value $i_{d\_ref}$ at calculation block 26. The output from the calculation block 26 is fed to a current controller 27. In some embodiments, the desired reactive current reference value $i_{d\_ref}$ may be zero but other values are, of course, possible and entirely within the scope of the claimed invention.

The dc link current $i_{dc}$ flowing through the common dc link 16 is measured and is sent to a droop controller 28 which may form part of the controller 22 and which is operable to determine the output voltage droop characteristic of its respective power converter 1, 2. The output voltage droop characteristic of each power converter 1, 2 is defined by a droop rate and a droop sign, positive or negative, applied to the droop rate. In accordance with embodiments of the invention, the droop controller 28 is operable (at block 30) to determine whether a positive or negative droop sign should be applied to the droop rate (set by block 32). To do this, the droop controller 28 determines the direction of flow of the dc link current $i_{dc}$ and determines the droop sign based on the direction of current flow through the common dc link 16. The direction of current flow is indicative of the direction of power flow through each power converter 1, 2. In some embodiments, when each power converter 1, 2 operates as a rectifier (when power is supplied to the common dc link 16 in power generation applications), the droop sign is positive. In other embodiments, when each power converter 1, 2 operates as an inverter (when power is supplied from the common dc link 16 in motoring applications), the droop sign is negative.

The product of the active current $i_q$ (as determined by the Forward Park transformation block 24) and signed droop rate, performed at calculation block 33, is sent to a low pass filter 34 which eliminates any high frequency noise.

The droop controller 28 is operable to modify the output voltage droop characteristic of its respective power converter n, as generally discussed above with respect to Figures 2 and 3, by varying the dc link reference voltage $V_{dc\_ref\_n}$ of the power converter. The average of the output currents of the plurality of parallel-connected power converters $I_{ave}$ is determined by the droop controller 28 in accordance with the following equation:-

$$I_{ave} = \frac{1}{N} \sum_{n=1}^{N} I_n \qquad \text{[Equation 5]}$$

where N is the total number of the parallel-connected power converters and $I_n$ is the rms value of the output current of each power converter $n$. $I_n$ and $I_{ave}$ must comply with the reference frame used by the controller 22 and may, therefore, need to be modified accordingly. In this example, the controller 22 uses the rotating reference frame and, hence, $I_n$ and $I_{ave}$ are transformed from the stationary reference frame into the rotating reference frame before $I_n$ and $I_{ave}$ are inputted into the calculation block 35. In alternative embodiments in which the controller 22 uses the three-phase stationary reference frame, $I_n$ and $I_{ave}$ may be the three-phase currents and their average, respectively.

In accordance with equation 2, the rms value of the output current $I_n$ of each power converter 10 is subtracted from the average of the output currents $I_{ave}$ at calculation block 35 and the resultant error is sent to a proportional controller 36 where it is modified in accordance with the offset adjustment value $k'$. The output of the proportional controller 36, which it will be clearly understood is based on the output current $I_n$, and the average of the output currents $I_{ave}$, is then used to modify the dc link reference voltage $V_{dc\_ref\_n}$ at the calculation block 38. The signed droop rate and the modified dc link reference voltage set-point $V_{dc\_ref\_sp}$ are also taken into account by the calculation block 38 to provide the adaptively controlled dc link reference voltage $V'_{dc\_ref}$, generally in accordance with equation 2.

The error between the modified dc link reference voltage $V'_{dc\_ref}$ and the measured dc link voltage $V_{dc}$ is determined at the calculation block 40 and any resultant error is used as an input for a dc voltage controller 42 which is preferably a proportional-integral (PI) controller. The output of the dc voltage controller 42 is used to determine the active current reference $i_{q\_ref}$. Finally, the active current $i_q$, determined as aforesaid by the Forward Park transformation block 24, is subtracted, at the calculation block 44, from the active current reference $i_{q\_ref}$.

The error between the determined active current $i_q$ and the active current reference $i_{q-ref}$ is fed to the current controller 27 along with the error between the determined reactive current $i_d$ and the reactive current reference $i_{d\_ref}$ as aforesaid, and the current controller 27 generates suitable PWM command signals to control each power converter 1, 2, for example by driving insulated gate bipolar transistors (IGBTs). Each controller 22 operates continuously and in real-time to provide for the active control of its associated power converter 1, 2 and, in particular, to provide for the active control of the output voltage droop characteristic of its associated power converter 1, 2. Both the current sharing performance and voltage regulation performance are thus improved.

Embodiments of the invention advantageously also provide for synchronisation of any number of parallel-connected power converters 1-N, since even a small phase difference between the power converters can cause an unwanted circulating current, especially under light load. Synchronisation of the power converters is achieved in the following manner.

The power converters 1-N are connected together to form a cascaded array. More particularly, each power converter includes a controller having an input for receiving a synchronisation signal from the controller of a preceding power converter in the array and an output for transmitting a synchronisation signal to the controller of a succeeding power converter in the array. The controller of the last power converter in the array transmits a synchronisation signal to the controller of the first power converter in the array to complete the connection and form a "closed loop".

A cascaded array of four controllers 1a, 2a, 3a, 4a associated with a cascaded array of four parallel-connected power converters is shown schematically in Figure 5. The input and output of each controller can be fibre optic channels so that the synchronisation signals are transmitted as optic signals through fibre optic cables, for example. Other means of transmitting the synchronisation signals, such as electrical or radio frequency (RF) signalling, can be used.

Each controller 1a, 2a, 3a, 4a is arranged to transmit a synchronisation signal consisting of a series of digital time pulses having states 0 and 1. The pulse period (i.e. the time between the falling edges of successive time pulses) can be measured by each controller and the pulse width of the time pulses (i.e. the period of time during which state 1 applies) can be used to provide information about the position the controller that transmits the synchronisation signal has within the array. The way in which each controller 1a, 2a, 3a, 4a, and hence its associated power converter, is allocated a role as a "master" or "slave" is described in more detail below with continued reference to Figure 5.

In a situation where all four of the power converters in the array are connected in sequence and operating normally, the controller 1a of the first power converter may be the "master" controller and the controllers 2a, 3a, 4a of the second, third and fourth power converters may be the "slave" controllers. In this example, the controller 1a of the first power converter outputs to the controller 2a of the second power converter a first synchronisation signal S1 having a pulse width t. The controller 2a of the second power converter receives the first synchronisation signal S1 having a pulse width t and identifies its position as the second power converter in the array based on the pulse width t of the first synchronisation signal S1.

The controller 2a of the second power converter outputs a second synchronisation signal S2 having a pulse width 2t. The controller 3a of the third power converter receives the second synchronisation signal S2 having a pulse width *2t* and identifies its position as the third power converter in the array based on the pulse width *2t* of the second synchronisation signal S2.

The controller 3a of the third power converter outputs a third synchronisation signal S3 having a pulse width 3t. The controller 4a of the fourth power converter receives the third synchronisation signal S3 having a pulse width *3t* and identifies its position as the fourth power converter in the array based on the pulse width *3t* of the third synchronisation signal S3.

The controller 4a of the fourth power converter outputs a fourth synchronisation signal S4 having a pulse width *4t*. The controller 1a of the first power converter receives the fourth synchronisation signal S4 of pulse width *4t* which confirms its role as a "master" controller and its operation thus remains unchanged.

The controllers 1a, 2a, 3a, 4a of the parallel-connected power converters, and hence the power converters themselves, are determined to be a "master" or a "slave" depending on when they come on-line. The controller of the power converter in the array that is the first to come on-line preferably assumes a role as a "master" controller and takes a position as the first controller in the array. Any controller that receives a synchronisation signal when its power converter comes on-line will preferably assume a role as a "slave" controller. Any "slave" controller that fails to receive a synchronisation signal for any reason (i.e. the immediately preceding controller in the array goes off-line or the synchronisation signal is disrupted) may assume a role as a "master" controller.

The cascaded array of power converters functions normally until one of the power converters goes off-line or one of the synchronisation signals is otherwise disrupted. For example, if the first power converter goes off-line or the first synchronisation signal S1 is disrupted, the controller 2a of the second power converter no longer receives a synchronisation signal. The controller 2a of the second power converter thus assumes the role of the "master" controller and takes the first position in the array. The controller 2a now outputs a first synchronisation signal S1 having a pulse width *t*. The controller 3a of the third power converter receives the first synchronisation signal S1 of pulse width *t* and takes a role as a "slave" controller because it is receiving a synchronisation signal, but now takes the second position in the array.

The controller 3a of the third power converter now outputs a second synchronisation signal S2 having a pulse width *2t*. The controller 4a of the fourth power converter receives the second synchronisation signal S2 of pulse width *2t* and takes a role as a "slave" controller because it is receiving a synchronisation signal, but now takes the third position in the array.

The controller 4a of the fourth power converter now outputs a third synchronisation signal S3 having a pulse width *3t*. When the first power converter comes back on-line, the controller 1a of the first power converter receives the third synchronisation signal S3 and assumes a role as a "slave" power converter because it is receiving a synchronisation signal. The controller 1a, and hence the first power converter, thus takes the fourth position in the array.

The controller 1a of the first power converter outputs a fourth synchronisation signal S4 having a pulse width *4t*. The controller 2a of the second power converter receives the fourth synchronisation signal S4 which confirms its role as a "master" power converter and its operation remains unchanged.

It will be appreciated from the foregoing that synchronisation of the parallel-connected power converters can be maintained, and that the power converters can continue to operate effectively, in the event of a fault occurring in any one or more of the power converters. Reliability is thus significantly improved when the parallel-connected power converters operate as a cascaded array.

Although embodiments of the invention have been described in the preceding paragraphs with reference to various examples, it should be understood that various modifications may be made to those examples without departing from the scope of the present invention, as claimed.

For example, the output voltage droop characteristic of only one of the power converters 1, 2 could be modified by varying the dc link reference voltage $V_{dc\_ref}$ of the respective power converter 1, 2 based on the average of the output currents of the plurality of parallel-connected power converters $I_{ave}$ and the output current $I_n$ of the respective one of the power converters 1, 2. The methodology may be employed with any number of power converters connected in parallel, whether they operate as active rectifiers and/or active inverters.

Although the droop rates of the power converters 1, 2 are shown to be the same as each other in Figures 2 and 3, it should be understood that the methodology described above is equally applicable when the droop rates of parallel-connected power converters are different.

## Claims

1. A method for controlling a plurality of power converters (1, 2) connected in parallel between an ac arrangement (12) and a common dc link (16), each of the power converters (1, 2) operating in accordance with a pulse width modulation (PWM) strategy and having an independently variable dc link reference voltage, the method comprising modifying an output voltage droop characteristic of at least one of the plurality of parallel-connected power converters (1, 2) by varying the dc link reference voltage of the at least one power converter (1, 2) based on the output current of the at least one power converter (1, 2) and the average of the output currents of the plurality of power converters (1, 2).

2. A method according to claim 1, wherein the method comprises modifying the output voltage droop characteristic of each of the plurality of parallel-connected power converters (1, 2) by varying the dc link reference voltage of each power converter (1, 2) based on the output current of each respective power converter (1, 2) and the average of the output currents of the plurality of power converters (1, 2).

3. A method according to claim 1 or claim 2, wherein the method comprises continuously measuring the output current of the or each power converter (1,2) and continuously determining the average of the output currents of the plurality of power converters (1, 2) to thereby actively modify the output voltage droop characteristic of the or each power converter (1, 2) by varying the dc link reference voltage of the or each power converter (1, 2).

4. A method according to any preceding claim, wherein the method comprises modifying the output voltage droop characteristic of a first power converter (1) by decreasing the dc link reference voltage of the first power converter (1) and modifying the output voltage droop characteristic of a second power converter (2) by increasing the dc link reference voltage of the second power converter (2).

5. A method according to any preceding claim, wherein the method comprises varying the dc link reference voltage of the or each power converter (1, 2) based on the error between the average of the output currents of the plurality of power converters (1, 2) and the rms output current of the or each respective power converter (1, 2).

6. A method according to any preceding claim, wherein the output voltage droop characteristic of the or each power converter (1, 2) is defined by a droop rate and a droop sign applied to the droop rate, the step of controlling the output voltage droop characteristic of at least one of the plurality of power converters (1, 2) further comprising determining the droop sign.

7. A method according to claim 6, wherein the step of determining the droop sign comprises determining the direction of current flow through the common dc link (16).

8. A method according to any preceding claim, wherein the method comprises synchronising the parallel-connected power converters (1, 2) by providing each of the power converters (1, 2) with a synchronisation signal.

9. A method according to any preceding claim, in which the PWM strategy of each power converter (1, 2) is defined by an independent voltage carrier signal and an independently controllable modulating sinusoidal voltage signal which are used to generate a PWM command signal for each PWM strategy, wherein the voltage carrier signals of the PWM strategies have the same switching period and wherein any desynchronisation of the PWM command signals causes an unwanted circulating current to flow between the power converters (1, 2), the method comprising providing the independently controllable modulating sinusoidal voltage signal of the PWM strategy of at least one of the power converters (1, 2) with a dc voltage offset to modify the PWM command signal of the at least one power converter (1, 2) and thereby increase the synchronisation of the PWM command signals so that the magnitude of any unwanted circulating current is reduced.

10. A plurality of power converters connected in parallel between an ac arrangement (12) and a common dc link (16), each of the power converters (1, 2) operating in accordance with a pulse width modulation (PWM) strategy and having an individually variable dc link reference voltage, at least one of the power converters (1, 2) including a droop controller (28) for controlling the output voltage droop characteristic of the power converter (1, 2), wherein the droop controller (28) is operable to modify the output voltage droop characteristic by varying the dc link reference voltage of the at least one power converter (1, 2) based on the output current of the at least one power converter (1, 2) and the average of the output currents of the plurality of power converters (1, 2).

11. A plurality of parallel-connected power converters according to claim 10, wherein each of the power converters (1, 2) includes a droop controller (28) and each droop controller (28) is operable to modify the output voltage droop characteristic of its respective power converter (1, 2) by varying the dc link reference voltage of the power converter (1, 2) based on the output current of the power converter (1, 2) and the average of the output currents of the plurality of power converters (1, 2).

12. A plurality of parallel-connected power converters according to claim 10 or claim 11, wherein the or each droop controller (28) is operable to actively vary the dc link reference voltage of its respective power converter (1, 2) based on continuous determinations of the output current of its respective power converter (1, 2) and the average of the output currents of the plurality of power converters (1, 2).

13. A plurality of parallel-connected power converters according to any of claims 10 to 12, wherein the output voltage droop characteristic of the or each power converter (1, 2) is defined by a droop rate and a droop sign applied to the droop rate, the or each droop controller (28) being operable to control the output voltage droop characteristic of its respective power converter (1, 2) by determining the droop sign.

14. A plurality of parallel-connected power converters according to claim 13, wherein the or each droop controller (28) is operable to determine the droop sign by determining the direction of current flow through the common dc link (16).

15. A plurality of parallel-connected power converters according to any of claims 10 to 14, wherein some or all of the parallel-connected power converters (1, 2) are operable as active rectifiers or active inverters.

**Patentansprüche**

1. Verfahren zum Steuern mehrerer Leistungsumsetzer (1, 2), die zwischen einer Wechselstromanordnung (12) und einer gemeinsamen Gleichstromverbindung (16) parallel geschaltet sind, wobei jeder der Leistungsumsetzer (1, 2) gemäß einer Impulsbreitenmodulationsstrategie (PWM-Strategie) arbeitet und eine unabhängig veränderliche Gleichstromverbindungs-Referenzspannung besitzt, wobei das Verfahren das Modifizieren einer Ausgangsspannungsabfall-Charakteristik wenigstens eines der mehreren parallel geschalteten Leistungsumsetzer (1, 2) durch Verändern der Gleichstromverbindungs-Referenzspannung des wenigstens einen Leistungsumsetzers (1, 2) anhand des Ausgangsstroms des wenigstens einen Leistungsumsetzers (1, 2) und des Durchschnitts der Ausgangsströme der mehreren Leistungsumsetzer (1, 2) umfasst.

2. Verfahren nach Anspruch 1, wobei das Verfahren das Modifizieren der Ausgangsspannungsabfall-Charakteristik jedes der mehreren parallel geschalteten Leistungsumsetzer (1, 2) durch Verändern der Gleichstromverbindungs-Referenzspannung jedes Leistungsumsetzers (1, 2) anhand des Ausgangsstroms jedes entsprechenden Leistungsumsetzers (1, 2) und des Durchschnitts der Ausgangsströme der mehreren Leistungsumsetzer (1, 2) umfasst.

3. Verfahren nach Anspruch 1 oder Anspruch 2, wobei das Verfahren das ununterbrochene Messen des Ausgangsstroms des oder jedes Leistungsumsetzers (1, 2) und das ununterbrochene Bestimmen des Durchschnitts der Ausgangsströme der mehreren Leistungsumsetzer (1, 2) umfasst, um **dadurch** die Ausgangsspannungsabfall-Charakteristik des oder jedes Leistungsumsetzers (1, 2) durch Verändern der Gleichstromverbindungs-Referenzspannung des oder jedes Leistungsumsetzers (1, 2) aktiv zu modifizieren.

4. Verfahren nach einem vorhergehenden Anspruch, wobei das Verfahren das Modifizieren der Ausgangsspannungsabfall-Charakteristik eines ersten Leistungsumsetzers (1) durch Absenken der Gleichstromverbindungs-Referenzspannung des ersten Leistungsumsetzers (1) und das Modifizieren der Ausgangsspannungsabfall-Charakteristik des zweiten Leistungsumsetzers (2) durch Erhöhen der Gleichstromverbindungs-Referenzspannung des zweiten Leistungsumsetzers (2) umfasst.

5. Verfahren nach einem vorhergehenden Anspruch, wobei das Verfahren das Verändern der Gleichstromverbindungs-Referenzspannung des oder jedes Leistungsumsetzers (1, 2) anhand des Fehlers zwischen dem Durchschnitt der Ausgangsströme der mehreren Leistungsumsetzer (1, 2) und dem quadratischen Mittelwert des Ausgangsstroms des oder jedes entsprechenden Leistungsumsetzers (1, 2) umfasst.

6. Verfahren nach einem vorhergehenden Anspruch, wobei die Ausgangsspannungsabfall-Charakteristik des oder jedes Leistungsumsetzers (1, 2) durch eine Abfallrate und ein auf die Abfallrate angewendetes Abfallvorzeichen definiert ist, wobei der Schritt des Steuerns der Ausgangsspannungsabfall-Charakteristik wenigstens eines der mehreren Leistungsumsetzer (1, 2) ferner das Bestimmen des Abfallvorzeichens umfasst.

7. Verfahren nach Anspruch 6, wobei der Schritt des Bestimmens des Abfallvorzeichens das Bestimmen der Richtung des Stromflusses durch die gemeinsame Gleichstromverbindung (16) umfasst.

8. Verfahren nach einem vorhergehenden Anspruch, wobei das Verfahren das Synchronisieren der parallel geschalteten Leistungsumsetzer (1, 2) durch Versehen jedes der Leistungsumsetzer (1, 2) mit einem Synchronisationssignal umfasst.

9. Verfahren nach einem vorhergehenden Anspruch, wobei die PWM-Strategie jedes Leistungsumsetzers (1, 2) durch ein unabhängiges Spannungsträgersignal und ein unabhängig steuerbares Modulations-Sinusspannungssignal, die verwendet werden, um ein PWM-Steuersignal für jede PWM-Strategie zu erzeugen, definiert ist, wobei die Spannungsträgersignale der PWM-Strategien die gleiche Schaltperiode haben und wobei jegliche Desynchronisation der PWM-Befehlssignale einen unerwünschten zirkulierenden Stromfluss zwischen den Leistungsumsetzern (1, 2) hervorruft, wobei das Verfahren das Versehen des unabhängig steuerbaren Modulations-Sinusspannungssignals der PWM-Strategie wenigstens eines der Leistungsumsetzer (1, 2) mit einem Gleichspannungsversatz umfasst, um das PWM-Befehlssignal des wenigstens einen Leistungsumsetzers (1, 2) zu modifizieren und um **dadurch** die Synchronisation der PWM-Befehlssignale zu erhöhen, so dass die Größe irgendeines unerwünschten zirkulierenden Stroms verringert wird.

10. Mehrzahl von Leistungsumsetzern, die zwischen einer Wechselstromanordnung (12) und einer gemeinsamen Gleichstromverbindung (16) parallel geschaltet sind, wobei jeder der Leistungsumsetzer (1, 2) in Übereinstimmung mit einer Impulsbreitenmodulationsstrategie (PWM-Strategie) arbeitet und eine einzeln veränderliche Gleichstromverbindungs-Referenzspannung besitzt, wobei wenigstens einer der Leistungsumsetzer (1, 2) eine Abfall-Steuereinheit (28) umfasst, um die Ausgangsspannungsabfall-Charakteristik des Leistungsumsetzers (1, 2) zu steuern, wobei die Abfall-Steuereinheit (28) betreibbar ist, um die Ausgangsspannungsabfall-Charakteristik durch Verändern der Gleichstromverbindungs-Referenzspannung des wenigstens einen Leistungsumsetzers (1, 2) anhand des Ausgangsstroms des wenigstens einen Leistungsumsetzers (1, 2) und des Durchschnitts der Ausgangsströme der mehreren Leistungsumsetzer (1, 2) zu modifizieren.

11. Mehrzahl von parallel geschalteten Leistungsumsetzern nach Anspruch 10, wobei jeder der Leistungsumsetzer (1, 2) eine Abfall-Steuereinheit (28) umfasst und jede Abfall-Steuereinheit (28) betreibbar ist, um die Ausgangsspannungsabfall-Charakteristik ihres entsprechenden Leistungsumsetzers (1, 2) durch Verändern der Gleichstromverbindungs-Referenzspannung des Leistungsumsetzers (1, 2) anhand des Ausgangsstroms des Leistungsumsetzers (1, 2) und des Durchschnitts der Ausgangsströme der mehreren Leistungsumsetzer (1, 2) zu modifizieren.

12. Mehrzahl von parallel geschalteten Leistungsumsetzern nach Anspruch 10 oder Anspruch 11, wobei die oder jede Abfall-Steuereinheit (28) betreibbar ist, um die Gleichstromverbindungs-Referenzspannung ihres entsprechenden Leistungsumsetzers (1, 2) anhand ununterbrochener Bestimmungen des Ausgangsstroms ihres jeweiligen Leistungsumsetzers (1, 2) und des Durchschnitts der Ausgangsströme der mehreren Leistungsumsetzer (1, 2) aktiv zu verändern.

13. Mehrzahl von parallel geschalteten Leistungsumsetzern nach einem der Ansprüche 10 bis 12, wobei die Ausgangsspannungsabfall-Charakteristik des oder jedes Leistungsumsetzers (1, 2) durch eine Abfallrate und ein auf die Abfallrate angewendetes Abfallvorzeichen definiert ist, wobei die oder jede Abfall-Steuereinheit (28) betreibbar ist, um die Ausgangsspannungsabfall-Charakteristik ihres entsprechenden Leistungsumsetzers (1, 2) durch Bestimmen des Abfallvorzeichens zu steuern.

14. Mehrzahl von parallel geschalteten Leistungsumsetzern nach Anspruch 13, wobei die oder jede Abfall-Steuereinheit (28) betreibbar ist, um das Abfallvorzeichen durch Bestimmen der Richtung des Stromflusses durch die gemeinsame Gleichstromverbindung (16) zu bestimmen.

15. Mehrzahl von parallel geschalteten Leistungsumsetzern nach einem der Ansprüche 10 bis 14, wobei einige oder alle der parallel geschalteten Leistungsumsetzer (1, 2) als aktive Gleichrichter oder aktive Wechselrichter betreibbar sind.

**Revendications**

1. Procédé pour contrôler une pluralité de convertisseurs de puissance (1, 2) connectés en parallèle entre un agencement à courant alternatif (12) et une liaison à courant continu commune (16), chacun des convertisseurs de puissance (1, 2) fonctionnant conformément à une stratégie de modulation de largeur d'impulsions (PWM) et ayant une tension de référence de liaison à courant continu indépendamment variable, le procédé comprenant la modification d'une caractéristique de chute de tension de sortie d'au moins un de la pluralité des convertisseurs de puissance (1, 2) connectés en parallèle en faisant varier la tension de référence de liaison à courant continu du au moins un convertisseur de puissance (1, 2) sur la base du courant de sortie du au moins un convertisseur de puissance (1, 2) et de la moyenne des courants de sortie de la pluralité des convertisseurs de puissance (1,2).

2. Procédé selon la revendication 1, dans lequel le procédé comprend la modification de la caractéristique de chute de tension de sortie de chacun de la pluralité des convertisseurs de puissance (1, 2) connectés en parallèle, en faisant varier la tension de référence de liaison à courant continu de chaque convertisseur de puissance (1, 2) sur la base du courant de sortie de chaque convertisseur de puissance respectif (1, 2) et de la moyenne des courants de sortie de la pluralité des convertisseurs de puissance (1, 2).

3. Procédé selon la revendication 1 ou la revendication 2, dans lequel le procédé comprend la mesure en continu du courant de sortie du ou de chaque convertisseur de puissance (1, 2) et la détermination en continu de la moyenne des courants de sortie de la pluralité des convertisseurs de puissance (1, 2) pour, par ce moyen, modifier de manière active la caractéristique de chute de tension de sortie du ou de chaque convertisseur de puissance (1, 2) en faisant varier la tension de référence de liaison à courant continu du ou de chaque convertisseur de puissance (1, 2).

4. Procédé selon l'une quelconque des revendications précédentes, dans lequel le procédé comprend la modification de la caractéristique de chute de tension de sortie d'un premier convertisseur de puissance (1), en diminuant la tension de référence de liaison à courant continu du premier convertisseur de puissance (1) et en modifiant la caractéristique de chute de tension de sortie d'un second convertisseur de puissance (2) en augmentant la tension de référence de liaison à courant continu du second convertisseur de puissance (2).

5. Procédé selon l'une quelconque des revendications précédentes, dans lequel le procédé comprend l'action de faire varier la tension de référence de liaison à courant continu du ou de chaque convertisseur de puissance (1, 2) sur la base de l'erreur entre la moyenne des courants de sortie de la pluralité des convertisseurs de puissance (1, 2) et le courant de sortie en valeur efficace du ou de chaque convertisseur de puissance (1, 2) respectif.

6. Procédé selon l'une quelconque des revendications précédentes, dans lequel la caractéristique de chute de tension de sortie du ou de chaque convertisseur de puissance (1, 2) est définie par une vitesse de chute et un signe de chute appliqué à la vitesse de chute, l'étape consistant à contrôler la caractéristique de chute de tension de sortie d'au moins un de la pluralité des convertisseurs de puissance (1, 2) comprenant en outre la détermination du signe de chute.

7. Procédé selon la revendication 6, dans lequel l'étape de détermination du signe de chute comprend la détermination de la direction de la circulation du courant à travers la liaison à courant continu commune (16).

8. Procédé selon l'une quelconque des revendications précédentes, dans lequel le procédé comprend la synchronisation des convertisseurs de puissance connectés en parallèle (1, 2) par la fourniture d'un signal de synchronisation à chacun des convertisseurs de puissance (1, 2).

9. Procédé selon l'une quelconque des revendications précédentes, dans lequel la stratégie PWM de chaque convertisseur de puissance (1, 2) est définie par un signal porteur de tension indépendant et un signal de tension de modulation sinusoïdal contrôlable indépendamment qui sont utilisés pour générer un signal de commande PWM pour chaque stratégie PWM, où les signaux porteurs de tension des stratégies PWM ont la même période de commutation et où toute désynchronisation des signaux de commande PWM entraîne qu'un courant de circulation non souhaité s'écoule entre les convertisseurs de puissance (1, 2), le procédé comprenant d'appliquer sur le signal de tension de modulation sinusoïdal contrôlable indépendamment de la stratégie PWM d'au moins un des convertisseurs de puissance (1, 2) un décalage de tension continue pour modifier le signal de commande PWM de l'au moins un convertisseur de puissance (1, 2) et, par ce moyen, augmenter la synchronisation des signaux de commande PWM de manière à ce que l'importance de tout courant de circulation non souhaité soit réduite.

10. Pluralité de convertisseurs de puissance connectés en parallèle entre un agencement à courant alternatif (12) et une liaison à courant continu commune (16), chacun des convertisseurs de,puissance (1, 2) fonctionnant conformément à une stratégie de modulation de largeur d'impulsions (PWM) et ayant une tension de référence de liaison à courant continu indépendamment variable, au moins un des convertisseurs de puissance (1, 2) comprenant un contrôleur de chute (28) pour contrôler la caractéristique de chute de tension de sortie du convertisseur de puissance (1, 2), où le contrôleur de chute (28) est utilisable pour modifier la caractéristique de chute de tension de sortie en faisant varier la tension de référence de liaison à courant continu de l'au moins un convertisseur de puissance (1, 2) sur la base du courant de sortie du au moins un convertisseur de puissance (1, 2) et de la moyenne des courants de sortie de la pluralité des convertisseurs de puissance (1, 2).

11. Pluralité de convertisseurs de puissance connectés en parallèle selon la revendication 10, dans lesquels chacun des convertisseurs de puissance (1, 2) comprend un contrôleur de chute (28) et chaque contrôleur de chute (28) est utilisable pour modifier la caractéristique de chute de tension de sortie de son convertisseur de puissance (1, 2) respectif en faisant varier la tension de référence de liaison à courant continu du convertisseur de puissance (1, 2) sur la base du courant de sortie du convertisseur de puissance (1, 2) et de la moyenne des courants de sortie de la pluralité des convertisseurs de puissance (1, 2).

12. Pluralité de convertisseurs de puissance connectés en parallèle selon la revendication 10 ou la revendication 11, dans lesquels le ou chaque, contrôleur de chute (28) est utilisable pour faire varier de manière active la tension de référence de liaison à courant continu de son convertisseur de puissance (1, 2) respectif sur la base de déterminations effectuées en continu du courant de sortie de son convertisseur de puissance (1, 2) respectif et de la moyenne des courants de sortie de la pluralité des convertisseurs de puissance (1, 2).

13. Pluralité de convertisseurs de puissance connectés en parallèle selon l'une quelconque des revendications 10 à 12, dans lesquels la caractéristique de chute de tension de sortie du ou de chaque convertisseur de puissance (1, 2) est définie par une vitesse de chute et un signe de chute appliqué à la vitesse de chute, le ou chaque contrôleur de chute (28) étant utilisable pour contrôler la caractéristique de chute de tension de sortie de son convertisseur de puissance (1, 2) respectif par détermination du signe de chute.

14. Pluralité de convertisseurs de puissance connectés en parallèle selon la revendication 13, dans lesquels le ou chaque contrôleur de chute (28) est utilisable pour déterminer le signe de la chute par détermination de la direction de la circulation du courant à travers la liaison de courant continu commune (16).

15. Pluralité de convertisseurs de puissance connectés en parallèle selon l'une quelconque des revendications 10 à 14, dans lesquels certains ou la totalité des convertisseurs de puissance connectés en parallèle (1, 2) sont utilisables comme redresseurs actifs ou inverseurs actifs.

Figure 1

Figure 2

Figure 3

Figure 4 ·

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040032755 A1